Europäisches Patentamt

European Patent Office

Office européen des brevets

(11) Publication number: **0 468 194 A2**

# EUROPEAN PATENT APPLICATION

(21) Application number: **91109860.6**

(22) Date of filing: **16.06.91**

(51) Int. Cl.⁵: **H04L 12/40**, G06F 13/00, H04L 12/00

(30) Priority: **26.07.90 US 558288**

(43) Date of publication of application:
**29.01.92 Bulletin 92/05**

(84) Designated Contracting States:
**DE FR GB IT**

(71) Applicant: **Hewlett-Packard Company**
**Mail Stop 20 B-O, 3000 Hanover Street**
**Palo Alto, California 94304(US)**

(72) Inventor: **Fogelman, Kimber D.**
**415 Sheldon Drive**
**Newark, DE 19711(US)**
Inventor: **Engel, Steven J.**
**1600 Cheryl Lane**
**Kennett Square, PA 19348(US)**

(74) Representative: **Schoppe, Fritz, Dipl.-Ing.**
**Seitnerstrasse 42**
**W-8023 Pullach bei München(DE)**

(54) **Method and system for daisy chained communication.**

(57) A method and system for transmitting command signals generated by a host unit to a particular module in a daisy-chain arrangement is shown to include a first signal processor (12) in the host unit for generating a command signal, having at least an address portion, and for transmitting the command signal to the first module. A second signal processor (11), contained within each module in the daisy-chain arrangement, receives the command signal and compares the address portion to a reference signal. The similarity between the signals determines whether the command signal is operative for that module. If it is determined that the command signal is not meant for that module, a modifier (36), contained in the second signal processor, modifies the address portion prior to transmission of the command signal to the next module. In a preferred embodiment, the reference signal is the same for each module. In an especially preferred embodiment, the address portion of the command signal is representative of one element in a set of sequential elements such as numbers or letters and the reference signal is representative of a particular element or number in the sequence. If numbers are utilized, it is preferred to modify the address portion to the next number in the sequence. In a still further embodiment, the second signal processor (11) is capable of generating a reply signal, having a reply address portion. In that embodiment, the second signal processor is connected to receive reply signals from other modules and operative to modify the reply address portion before transmitting the received reply signal to the previous module, i.e., the module closer to the host unit (12). In a still further embodiment, the second signal processor (11) includes an analyzer (60) for analyzing a portion of the command signal to determine whether the command signal can be executed by that module. In that further embodiment, the address portion of the command signal is only modified when the command signal can be executed by that module and the address portion of the command signal is not similar to the reference signal.

Field of the Invention

The present invention relates to the field of electronic communication and more particularly to communication between electronic devices which have been linked together.

Background of the Invention

In the continuous effort to improve and expand man's knowledge, research has embraced automation, and particularly automation utilizing microprocessor controlled devices. Such automation can be seen, for example, in the field of analytical chemistry. Although the invention is discussed in relation to analytical chemistry, and at times particularly in relation to automated equipment for performing chemical analysis, the scope of the present invention is not to be so limited. The invention is applicable to any system which includes a number of electronic devices requiring communication with a host or master controller.

In order to maximize the precision by which chemical compounds can be analyzed and further to minimize the time required to make such analyses, analytical equipment has been automated to the point of being microprocessor controlled. In particular, consider a typical analytical laboratory which identifies the components of given chemical compounds utilizing gas chromatography.

Commercially available gas chromatographs such as the HP 5890A, manufactured and sold by Hewlett Packard Company of Palo Alto, California, will include one or more microprocessors for controlling various components such as heaters and valves. Typically, such a chromatographic system includes auxiliary devices such as an HP 7673A automatic sampler, which automatic sampler includes both an automatic injector and an automated sample tray. Each of these devices is operable in response to microprocessor generated commands.

In order to prevent each device in such a chromatographic system from operating independently, the entire system can be coordinated by a host controller such as the HP 3393A computing integrator or an IBM personal computer. In such an arrangement, it is necessary for each of the system components to communicate electronically with the host controller. Generally, such communications take place via RS-232C serial interfaces. In that type of system, the host controller can control the operation of each device and receive data representative of the chemical analysis or operations being performed.

The use of RS-232C serial interface communications is advantageous because a relatively small number of wires are contained in the communication cable, transmission over large distances is possible and most commercially available controllers have RS-232C communication ports already installed.

The problem with such RS-232C communication results from the addition of more and more devices to the system. Typically, each device is independently connected to the host computer for communication purposes. As will be appreciated, each new connection requires an additional communication port on the host computer. Since generally only two or three communication ports are provided, the extent or flexibility by which devices can be added to the system is significantly limited. Additionally, if such a system were assembled, the mass of wiring necessary to establish electrical communication not only provides a bad appearance, but could also effect the safety of those in the laboratory.

Despite such drawbacks, another advantage of RS-232C serial communications is evident when a piece of laboratory equipment needs to be moved away from the central system location. In that situation, only one cable requires lengthening.

Consequently, a need exists for a system which is capable of providing communication between the electronically controlled components of a system and a host controller, which system is not limited by the number of connection ports available on the controller. Daisy-chain connections have been proposed for the interconnection of laboratory equipment. A daisy-chain arrangement is one in which modules are connected to each other in a serial fashion where a signal is passed from module to module until it reaches a desired module. Other schemes also include HPIB-type communications and differential serial communications and multiplex communications. These schemes typically require hardware setable device addresses.

One communication protocol has been suggested for use with the Microlab 900 sold by the Hamilton Company of Reno, Nevada, for use in a daisy-chain arrangement. However, that protocol requires the assignment of addresses each time the system is powered up, i.e., at each power up, the Microlab 900 system re-assigns addresses to system nodes or modules. Two additional problems with that system involve first, the inability to interrupt the daisy-chain or interpose into the daisy-chain an additional host controller and second, the inability to generate command signals which are independent of position in the daisy-chain. To place these problems in perspective, consider first interposing a second host controller in the daisy-chain. For example, assume the first host controller is remotely located while the second host controller is local in relation to the laboratory equipment. The Microlab 900 system does not have that versatility. Consider next a situation where a user does not know where in the daisy-chain a particular unit, such as a pump, is located but does know that of three pumps in the chain, the pump of interest is second. The microlab 900 system would not be able to accurately transmit commands in that situation.

Summary of the Invention

The disadvantages of prior systems are overcome and the advantages of the invention are achieved in a method and system for transmitting command signals generated by a host unit to a particular module in a daisy-chain arrangement is shown to include a first signal processor in the host unit for generating a command signal, having at least an address portion, and for transmitting the command signal to the first module. A second signal processor, contained within each module in the daisy-chain arrangement, receives the command signal and compares the address portion to a reference signal. The similarity between the signals determines whether the command signal is operative for that module. If it is determined that the command signal is not meant for that module, a modifier, contained in the second signal processor, modifies the address portion prior to transmission of the command signal to the next module. In a preferred embodiment, the reference signal is the same for each module. In an especially preferred embodiment, the address portion of the command signal is representative of one element in a set of sequential elements such as numbers or letters and the reference signal is representative of a particular element or number in the sequence. If numbers are utilized, it is preferred to modify the address portion to the next number in the sequence. In a still further embodiment, the second signal processor is capable of generating a reply signal, having a reply address portion. In that embodiment, the second signal processor is connected to receive reply signals from other modules and operative to modify the reply address portion before transmitting the received reply signal to the previous module, i.e., the module closer to the host unit. In a still further embodiment, the second signal processor includes an analyzer for analyzing a portion of the command signal to determine whether the command signal can be executed by that module. In that further embodiment, the address portion of the command signal is only modified when the command signal can be executed by that module and the address portion of the command signal is not similar to the reference signal.

Brief Description of the Drawings

The present invention will be better understood, and its numerous objects and advantages will become apparent by reference to the following detailed description of the invention when taken in conjunction with the following drawings, in which:

Fig.1 is a diagrammatic view of an electronically automated analysis system wherein each module of the system communicates in accordance with the present invention;

Fig.2 a block diagram of the communication link between each of the modules shown in Fig. 1;

Fig. 3 is a flow chart of the operation of the present invention as contained and implemented by each of the modules shown in Fig. 2;

Fig. 4 a block diagram of a signal processor contained in each of the modules shown in Fig. 1;

Fig. 5 is an addition to the flow chart of Fig. 3 for the operation of an alternative embodiment of the present invention; and

Fig. 6 is an addition to the flow chart of Fig. 3 for the operation of an alternative embodiment of the present invention.

Detailed Description of the Embodiments

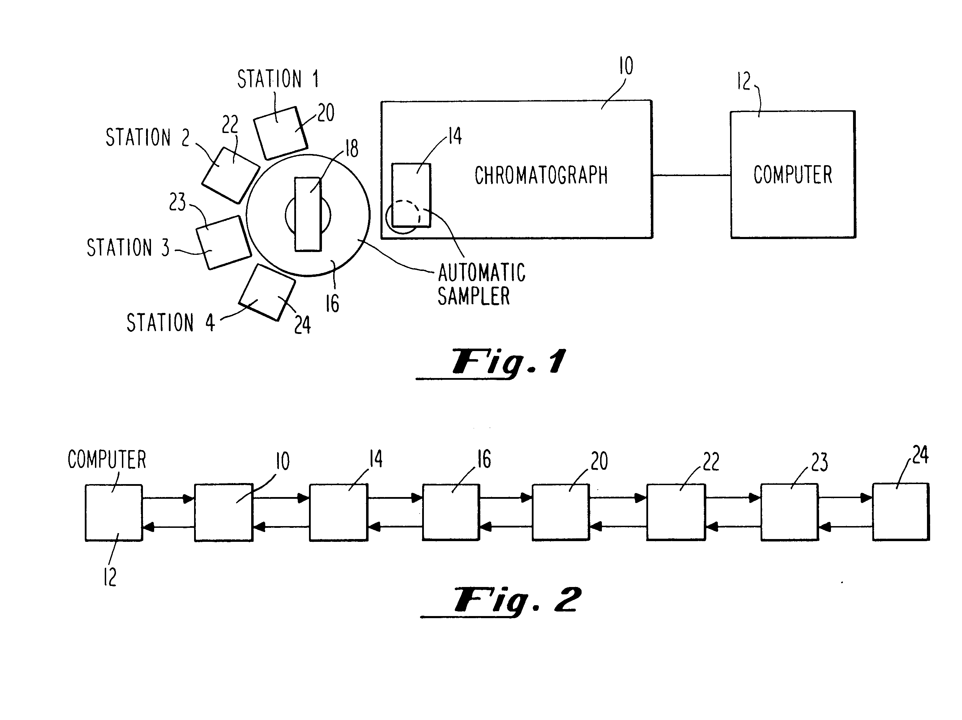

A new and novel system for transmitting command signals generated by a host unit to a particular module in a group of modules is generally shown in relation to the analysis of a chemical compound in Fig. 1. It will be recalled that although the invention is described in relation to a chromatographic analysis system, the invention is not so limited. Other uses of the invention are possible. The inventiuon is applicable to any system which includes electronic components having a need to communicate with one another.

A chromatograph 10 is electrically connected to host unit or computer 12. An automatic sampler is positioned proximate chromatograph 10 and includes an automatic injector 14 and an automated sample tray 16. As will be appreciated, automatic injector 14 includes mechanisms for moving a syringe or other injection device towards and away from the inlet end of a chromatographic column (not shown) contained in chromatograph 10. Automated sample tray 16 is known to include robot arm 18. Robot arm 18 manipulates sample containers between the automatic injector 14 and the various work stations 20, 22, 23 and 24. As shown in Fig. 2, each of the modules 10, 14, 16, 20, 22, 23 and 24 are electrically connected in a daisy-chain arrangement.

Referring now to Fig. 2, computer 12, which can also be viewed as a signal processor, generates a command signal and transmits such command signal to the first module, module 10, in the daisy-chain arrangement. In the preferred embodiment of the present invention the command signal generated by processor 12 includes three portions, namely, an identifier, an address, and a command. Such a command signal could be represented as follows:

⟨ lead char ⟩ ⟨ address ⟩ ⟨ command ⟩

It should be noted that the use of a lead character in the command signal is optional.

In other embodiments of the invention, the command signal could have a terminator symbol representative of the end of a command signal.

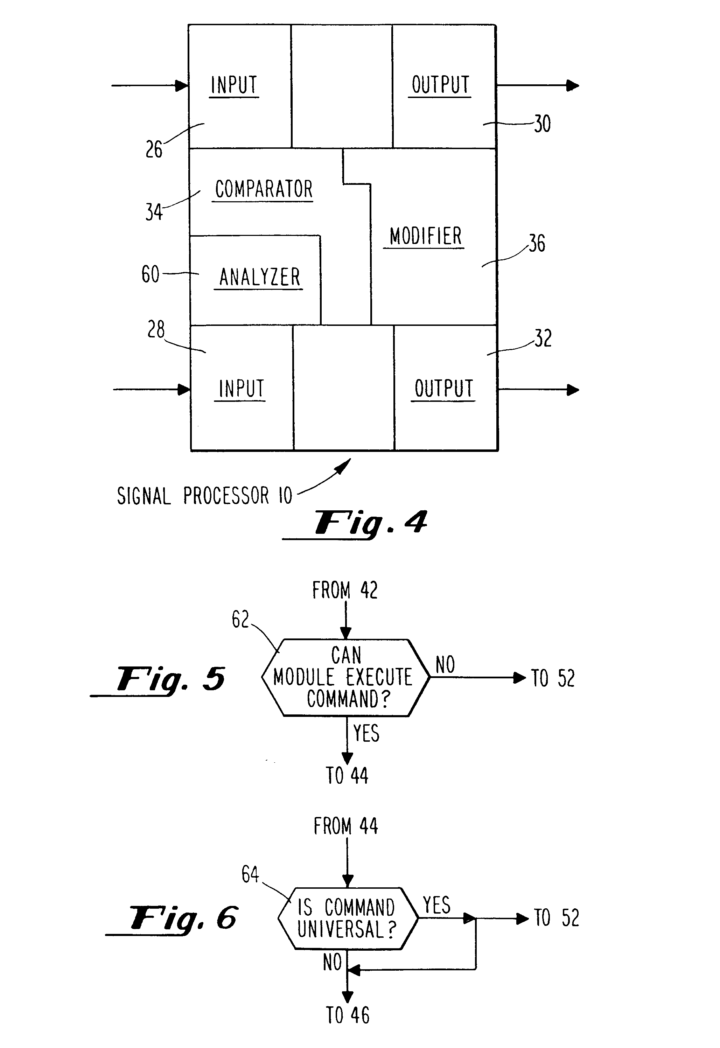

Chromatograph 10, as do all of modules 14, 16, 20, 22, 23, and 24, includes a signal processor which in the preferred embodiment is a micro-processor. Fig. 2 depicts only such signal processors connected in a daisy-chain arrangement. The details of the signal processor are explained in greater detail in relation to Fig. 4. Each signal processor has inputs 26, 28 and outputs 30 and 32. At least one input 26 is connected to receive the command signal from computer 12. The signal processor includes a comparator 34 for comparing a portion of the command signal to a reference signal. Similarities between the reference signal and that portion of the command signal will determine or signify whether that command signal is operative for that module, i.e., chromatograph 10. Output 30 is shown as being connected to transmit the command signal to automatic injector 14, i.e., the next module in the daisy-chain. Such transmission occurs after it has been determined by comparator 34 that the command signal received from computer 12 is not operative for chromatograph 10.

The signal processor is also shown to include a modifier which modifies the address portion of the command signal prior to transmitting the command signal to the next module, i.e., the address is modified prior to transmission to automatic injector 14. If comparator 34 determines that the command signal is operative for chromatograph 10, the signal processor will not transmit the command signal to automatic injector 14, but rather, will execute such command signal.

Although not shown, it should be understood that each of the modules 14, 16, 20, 22, 23 and 24 contain a signal processor similar to that shown in Fig. 4. It will also be understood that if the signal processor is a micro-processor that the principles of the present invention can be implemented in software within the micro-processor memory. If multiple ports are available, one set of input and output ports could be utilized for command signals and the other set of ports could be used for reply signals. Reply signals are explained later herein.

In a preferred embodiment of the invention, the reference signal utilized by comparator 34 in each of the modules is the same. It is also preferred that the address portion of the command signal be representative of one element in a set of sequential elements. In an especially preferred embodiment, the reference signal is representative of the first element in the set of sequential elements. If comparator 34 determines that the command signal is not operative for the associated module, modifier 36 modifies the address portion of the command signal to be representative of a different element in the set of sequential elements and transmits the command signal to the next module. It is preferred that the modification of the address is such that the new address is representative of the next sequential element in the set.

Example of sequential elements which can be utilized in the address portion of the command signal include a set of numbers or letters arranged in a sequence, for example, the numbers 1 through 7 or the letters A through G. In an embodiment where numbers are utilized, the reference signal for each module would be representative of the number 1. In such a system, if computer 12 wished to send a command signal to module 20, it would generate the address portion of the command signal to be representative of the number 4. Module 10 would receive such signal, determine that address 4 is not similar to the reference signal which is representative of the number 1. The signal processor would then transmit a command signal to module 14.

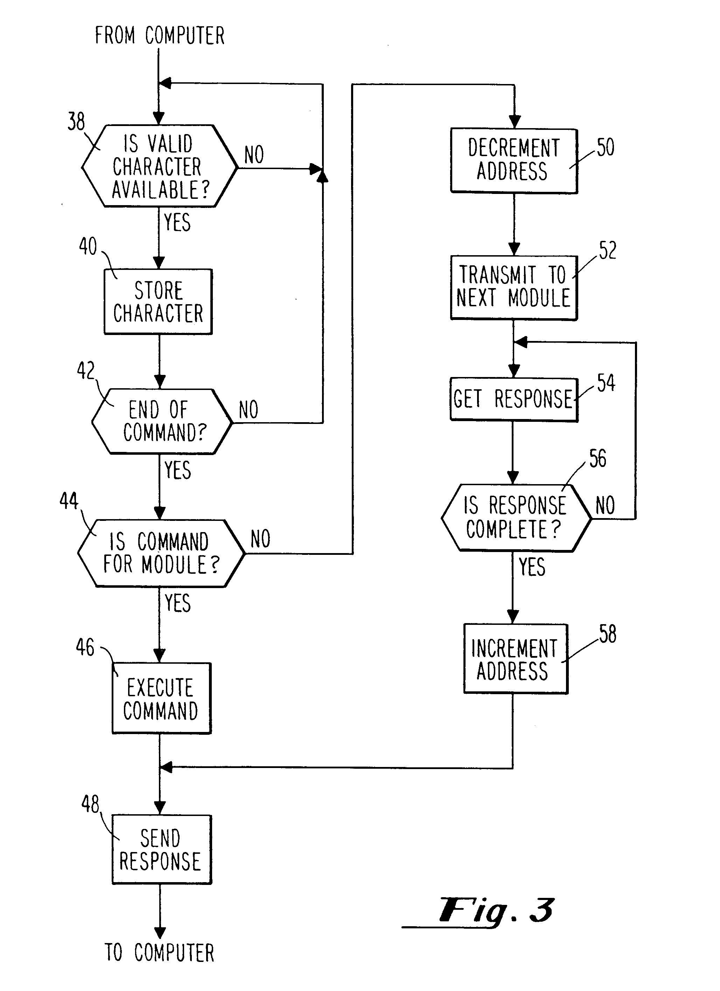

Before transmission of the command signal to module 14, the address of the command signal would be modified so that the address portion is representative of the number next closest to the initial number in the sequence, i.e., the address portion would be modified to be representative of the number 3. This address modification process and transmission would continue through modules 14 and 16, whereupon the address of the command signal transmitted to module 20 would finally be representative of the number 1. Module 20 would then determine that the command signal is operative for that module and would execute the command. A preferred method for determining operativeness and modification of the address portion of the command signal is more particularly described in relation to Fig. 3. However, before considering Fig. 3, it will be noted that the signal processor is also operative to generate a reply signal.

The reply signal is a signal which is transmitted back to computer 12 in order to indicate to computer 12 either the completion of a command signal or to indicate the present execution of a command signal. In the embodiment depicted in Fig. 2, the reply signal, similar to the command signal, includes a reply identifier, a reply address and a reply. Such a signal could be designated in the following format:

〈 Lead Char 〉〈 Reply Address 〉〈 Reply 〉

In the preferred embodiment, each transmitter 28 has the capability of generating a reply signal which reply signal is transmitted to the next module in the daisy-chain between the transmitting module and computer 12. Each signal processor is connected to receive the reply signal at input 28 and modifier 36 is operative to modify the reply address portion of the received reply signal. The modified reply signal is re-transmitted at output 32 to the next module in the daisy-chain with a modified reply address portion.

Similar to the address portion of the command signal, the reply address portion of the reply signal is representative of one element in a set of sequential elements. For example, the set of elements utilized in relation to the reply address can be a set of numbers or letters. If numbers are used, modifier 36 modifies the reply address by causing the reply address to be representative of the next number in the sequence of numbers. In an especially preferred embodiment, transmitter 28 modifies the reply address to be representative of the number which is next farthest from the initial number in the sequence. In a still further embodiment, the set of elements which are represented by the command signal address and the set of elements which are represented by the reply address are identical.

In the module in which the reply signal is generated an address which is representative of the initial number in the reply address sequence is inserted in such a reply signal. The continual modification of the reply address as the reply signal is received and retransmitted from module to module will result in the presentation of an address to computer 12 which is representative of the number of modifications which have been made which in turn is representative of the module from which the reply signal originated.

Consider the following example. Assume that module 20, i.e., the module positioned four modules away from computer 12, wished to send a reply signal to computer 12. Module 20 would generate a reply signal including the address portion representative of the number 1, the initial number in the number sequence. Module 16 would receive such signal and modify the reply address portion to the number next farthest from the address number, i.e. the address would be modified to now be representative of the number 2. The signal processor would then transmit the modified reply signal to module 14. This address modification process and transmission would continue through modules 14 and 10, whereupon the address of the command signal transmitted to computer 12 would be representative of the number 4. Computer 12 would then determine that the reply signal was generated by the fourth module or module 20. The advantage of such a system is that the module need not know which position it has in the daisy chain, i.e., the position of the module need not be preset nor do positions need be assigned at power up.

In order to more particularly understand the operation of the present invention, consider the flow chart shown in Fig. 3. The flow chart shown in Fig. 3, is generally representative of the software implemented in the signal processors contained in each module in the daisy-chain arrangement. As shown in Fig. 3, when module 10 receives a command signal from computer 12 the signal processor first determines at step 38 whether a valid character is available. In other words, at step 38 it is determined whether the command signal is in fact a command signal. Such an operation can be achieved by recognition of the identifier portion of the command signal. If the character received by the signal processor is not a valid character, i.e., is not representative of the identifier, the processor will await further signals from computer 12. If the character is a valid character, i.e., it either is representative of the identifier or is a character following the identifier, such character will be stored at step 40. At step 42 the signal processor determines whether it has received the end of the command signal. If the end of the command signal has not been received, the processor loops back to step 38 to receive the next valid character.

If the end of the command has been received, the signal processor determines at step 44 whether such command signal is intended for module 10 by a comparison operation. Such a comparison was previously described in relation to comparator 34 in Fig. 4. If the command signal is to be operative for module 10, such signal is executed at step 46 and any reply signal is generated by the signal processor at step 48. If it is determined at step 44 that the command signal is not for module 10, the signal processor will decrement the address, i.e., will modify the address portion to be representative of another element in the set of sequential elements at step 50. Thereafter, the signal processor will transmit the modified command signal to the next module in the daisy-chain at 52.

In the preferred embodiment, each module is operative to wait for a reply signal at 54 after having transmitted a command signal at 52. If the reply signal is determined to be complete at 56, the signal processor will increment the reply address portion of the reply signal at 58 and will transmit the so-modified reply signal to the next module in the daisy-chain which is closer to computer 12.

In a further embodiment of the system and method of the present invention, it is possible for signal processor 10 to transmit a command signal without knowing the exact position of the module for which the command is intended. In such a situation it is only necessary to know the position of the desired module in relation to other modules of that type. For example, suppose there are three pumps in a given system and it is desired to send a command signal to the second pump in the system. It is not necessary in this further embodiment to know the exact position of the second pump, but only that the pump is the second pump in the system.

In such a further system and method signal processor 10 would generate a command signal having at least an address portion, wherein the address portion is representative of the position the desired module has in relation to other like modules. The signal processor contained in each module, having input 26 and output 30 (Fig. 4), also includes an analyzer 60 for analyzing at least a portion of the command signal, preferably the command portion, to determine whether the command portion can be executed by that module. Such a determination is shown to be implemented in software in Fig. 5 at step 62. The software modification shown in Fig. 5 is a modification to the flow chart shown in Fig. 3. If the command portion cannot be executed by that module, the signal is output with no further modification. In the software implementation, the command signal is transmitted at 52.

If analyzer 60 determines that the command portion can be executed by that module, comparator 34 then compares the address portion a reference signal, wherein similarity between the address portion and the reference signal signifies whether the command signal is operative or intended for that particular module. If comparator 34 determines that the command signal is not operative for that particular module, modifier 36 modifies the address portion of the command signal prior to transmission to the next module. Except as specifically changed in relation to this embodiment, the modification and comparison of the address portion of the command signal is an identical operation to that described above.

It should also be noted that analyzer 60 could analyze only the address portion of the command signal in order to determine whether the command signal is operative for that module. In such an embodiment, it will be desirable to group several of the modules into sub-groups having unique addresses. In other words, the reference signal is identical for each module in the sub-group and different for all other modules.

In a still further embodiment of the present invention it is possible to generate a universal command signal. A universal command signal is one which all modules are to execute. In such a situation, none of the modules would modify the address portion of the command signal. An example of such a universal signal would be one setting the system in a "ready" status. In such an embodiment, it would only be necessary for computer 12 to be capable of generating an identifier signifying a universal signal. Implementation of this embodiment in the flow chart of Fig. 3 is shown in Fig. 6. If it is determined at 64 that the command signal is a universal signal, the universal signal is transmitted to the next module at 52 and is concurrently executed at 46. One method for implementing this embodiment is to generate a command signal having an address portion which is not representative of any element in the set of sequential elements, i.e., the address would be different than any other module address.

While the invention has been described and illustrated with reference to specific embodiments, those skilled in the art will recognize that modification and variations may be made without departing from the principles of the invention as described herein above and set forth in the following claims.

## Claims

1. A system for transmitting command signals generated by a host unit to a particular module in a group of modules (10, 14, 16, 20, 22, 23, 24), said modules being interconnected in a daisy chain arrangement, said system comprising:

a first signal processor (12) contained in said host unit for generating said command signal and for transmitting said command signal to the first (10) of said modules in said daisy chain arrangement, wherein the generated command signal comprises at least an address portion; and

a second signal processor (11), contained within each of said modules (10, 14, 16, 20, 22, 23, 24), having a first input (26) and a first output (30), wherein said first input is connected to receive said command signal and wherein said first output is connected to transmit said command signal to the next module in said daisy-chain arrangement, said second signal processor (11) comprising a comparator (34) for comparing said address portion of said command signal to a reference signal, wherein similarity between said address portion and said reference signal signifies whether said command signal is operative for that module and said second signal processor further comprises a signal modifier (36) for modifying the address portion of said command signal and wherein a command signal with a modified address portion is transmitted from said first output to the next module in said daisy-chain arrangement when it is determined that said command signal is not operative for that module.

2.    The system of claim 1, wherein said reference signal is the same for each module.

3.    The system of claim 2, wherein the address portion of said command signal is representative of one element in a set of sequential elements and wherein said reference signal is representative of an element in said set of sequential elements.

4.    The system of claim 3, wherein said second signal processor (11) is operative to modify said address portion to the number next closest to the initial number in said sequence.

5.    The system of claim 1, wherein said second processor (11) is also operative to generate a reply signal, wherein the generated reply signal comprises at least a reply address and wherein said second processor (11) is connected to receive reply signals from other modules at a second input (28), wherein said signal modifier is operative to also modify the reply address portion of received reply signals and wherein said second signal processor transmits said reply signal with a modified reply address portion to the previous module in said daisy chain from a second output (32).

6.    The system of claim 1, wherein said second signal processor further comprises an analyzer (60) for analyzing at least a portion of said command signal to determine whether said command signal can be executed by that module, wherein the address portion of said command signal is modified only when said analyzer (60) determines that said command signal can be executed by that module and said comparator (34) determines that said command signal is not operative for that module.

7.    A method for transmitting command signals generated by a host unit (12) to a particular module in a group of modules, said modules being interconnected in a daisy chain arrangement, said system comprising the steps of:
    generating said command signal and transmitting said command signal from said host unit (12) to the first (10) of said modules in said daisy chain arrangement, wherein the generated command signal comprises at least an address portion;
    receiving said command signal, comparing at least a portion of said command signal to a reference signal, wherein similarity between said portion and said reference signal signifies whether said command signal is operative for that module and modifying the address portion of said command signal, prior to transmission of said command signal to the next module in said daisy-chain arrangement when it is determined that said command signal is not operative for that module.

8.    The method of claim 7, wherein a number of said modules define a sub-group, wherein said reference signal is identical for each module in said subgroup and wherein said reference signal for all other modules is different than the reference signal used for the modules in said sub-group.

9.    The method of claim 7, wherein the address portion of said command signal is representative of one element in a set of sequential elements, further comprising the steps of generating a universal command signal and transmitting said universal command signal to the first (10) of said modules in said-daisy chain arrangement, wherein the generated universal command signal comprises at least an address portion, said address portion not being representative of any element in said set of sequential elements.

10.    The method of claim 7, further comprising the steps of generating a reply signal wherein the generated reply signal comprises at least a reply address, transmitting said reply signal to the module in said daisy chain next closest to said host unit, receiving said reply signal, modifying the reply address portion of the received reply signal and transmitting said received reply signal with a modified reply address portion to the next module in said daisy chain.

**Fig. 1**

**Fig. 2**

EP 0 468 194 A2

FROM COMPUTER

38 — IS VALID CHARACTER AVAILABLE? — NO

YES

40 — STORE CHARACTER

42 — END OF COMMAND? — NO

YES

44 — IS COMMAND FOR MODULE? — NO

YES

46 — EXECUTE COMMAND

48 — SEND RESPONSE

TO COMPUTER

50 — DECREMENT ADDRESS

52 — TRANSMIT TO NEXT MODULE

54 — GET RESPONSE

56 — IS RESPONSE COMPLETE? — NO

YES

58 — INCREMENT ADDRESS

*Fig. 3*

9

SIGNAL PROCESSOR 10

*Fig. 4*

*Fig. 5*

FROM 42

CAN MODULE EXECUTE COMMAND? — NO → TO 52

YES

TO 44

*Fig. 6*

FROM 44

IS COMMAND UNIVERSAL? — YES → TO 52

NO

TO 46